# EUROPEAN PATENT SPECIFICATION

(11) **EP 0 704 264 B1**
(45) Date of publication and mention of the grant of the patent: **07.03.2001**
(21) Application number: 95115340.2
(22) Date of filing: 28.09.1995
(51) Int. Cl.: B22F 9/12, B22F 1/00, H01F 1/00, H01F 1/153, C22C 32/00

(54) **Composite ultrafine particles and method for production thereof**
Sehr feine Verbundpulver und Verfahren zu ihrer Herstellung
Poudre composite très fine ainsi que sa préparation

(30) Priority: 30.09.1994 JP 25968194
(43) Date of publication of application: 03.04.1996
(73) Proprietor: YKK CORPORATION, Chiyoda-ku, Tokyo (JP); Masumoto, Tsuyoshi, Sendai-shi Miyagi-ken (JP); Inoue, Akihisa, Sendai-shi, Miyagi-ken (JP)
(72) Inventor: Yamaguchi, Tadashi, Sendai-shi, Miyagi-ken (JP); Kobayashi, Masayuki, Kurokawa-gun, Miyagi-ken (JP); Inoue, Akihisa, Aoba-ku, Sendai-shi, Miyagi-ken (JP); Masumoto, Tsuyoshi, Sendai-shi, Miyagi-ken (JP)
(74) Representative: Patentanwälte Leinweber & Zimmermann

(56) References cited:
- EP-A- 0 150 048
- EP-A- 0 417 733
- EP-A- 0 443 647
- DE-A- 3 339 490
- JOURNAL OF ALLOYS AND COMPOUNDS, vol. 193, no. 1 / 02, 15 March 1993 LAUSANNE,CH, pages 271-273, XP 000356286 KEN-ICHI MACHIDA ET AL 'PLASMA NITRIDING OF SM2FE17'
- DATABASE WPI Section Ch, Week 9433 Derwent Publications Ltd., London, GB; Class L03, AN 94-269257 & JP-A-06 199 525 ( ADACHI K) , 19 July 1994

## Description

### BACKGROUND OF THE INVENTION

### 1. Field of the Invention:

This invention relates to composite ultrafine particles and a method for the production thereof. More particularly, it relates to composite ultrafine particles of the order of nm as specified in the appended claims and a method for the production thereof.

### 2. Description of the Prior Art:

As magnetic materials for such magnetic recording media as magnetic tapes, γ - Fe₂O₃ and Co-containing γ - Fe₂O₃ have been in popular use for a long time. These magnetic materials are acicular particles having an approximate length of 1µm and, when manufactured into particles endowed with anisotropy of shape and magnetism, are enabled to attain high densification (increase in number of particles per unit area) and manifest high coercive force.

Since these magnetic particles are produced by the liquid phase process, however, they are at a disadvantage in suffering such impurities as NaOH to persist in the produced particles. The γ - Fe₂O₃ magnetic particles, for example, are obtained by adding an alkali (NaOH) to the aqueous solution of an iron salt thereby forming a precipitate of Fe(OH)₂, oxidizing the precipitate with air thereby converting it into acicular goethite (α - FeOOH) particles, and then subjecting these particles to dehydration, reduction, and oxidation. Though the length and the morphological anisotropy (length/diameter) of the goethite particles can be controlled by properly setting such conditions as the iron salt concentration, temperature, pH, agitation, or the like of the solution, the particles consequently obtained have a size of the order of microns. When they are manufactured into a magnetic recording medium, therefore, the produced magnetic recording medium incurs difficulty in attaining higher densification.

It is widely known that the coercive force of a magnetic material depends in large measure on the size of the particles of the material and it increases in proportion as the particle diameter of the material decreases. As means to produce a magnetic material of ultrafine particles, therefore, the development of gaseous phase processes has been under way in recent years.

Japanese Patent Application, KOKAI (Early Publication) No. 4-304,304, for example, discloses a method for producing a permanent rare earth magnet by causing a rare earth element selected from the group consisting of Pr, Nd, Gd, Tb, La, Ce, Lu, Y, Dy, Ho, and Er to be vaporized simultaneously with Fe or Co at a prescribed ratio in a non-oxidizing atmosphere (atmosphere of argon) thereby producing an ultrafine alloy powder and then compressing and sintering this powder in a non-oxidizing atmosphere in the presence of a magnetic field.

This method, however, forms the ultrafine powder by passing the mixed vapor of the two materials mentioned above through a nozzle which is flared forward thereby cooling the mixed vapor through the adiabatic expansion. The produced ultrafine powder, therefore, is an ultrafine powder of "alloy" of the two materials mentioned above.

When this ultrafine powder of alloy is used as a magnetic material, therefore, the magnetic material has room for further improvement in wear resistance and strength, particularly the strength at elevated temperature.

Further, JP-A-06199525 discloses a process for the production of a rare earth transition metal system wherein rare earth metals and transition metals are put into a vacuum room, ammonia or hexane is introduced into this vacuum room and the vacuum room is cooled by liquid nitrogen such that the gas is condensed on the inner wall of the vacuum room, whereafter each metal is heated and gasified in the atmosphere of ammonium, methane, diborane and the compound vapor is isolated in the solid phase matrix. By removing the cold medium the matrix produced by the known process is fused to thereby obtain a rare earth transition metal system compound having ultrafine grains.

### SUMMARY OF THE INVENTION

It is a primary object of the present invention, therefore, to provide composite ultrafine particles of the order of nanometer containing ferromagnetic properties, excelling in wear resistance and strength, particularly the strength at elevated temperatures, and permitting retention of ferromagnetism for a long time and a method for the production thereof.

Another object of the present invention is to provide composite ultrafine particles of the order of nanometer possessing such morphologically anisotropic structure that a ceramic ultrafine portion is extended from a magnetic ultrafine portion and therefore permitting manufacture of a magnetic recording medium capable of attaining high densification and, at the same time, manifesting high coercive force and a method for the production thereof.

To accomplish the objects mentioned above, in accordance with the present invention, there is provided a method for the production of composite ultrafine particles as specified in appended claim 9.

The method of the present invention allows production of composite ultrafine particles which are composed of metallic ultrafine portions of at least one element selected from among Fe, Co, and Ni and ceramic ultrafine portions of at least one rare earth element.

This method, when using an alloy containing Nd as a rare earth element, permits production of composite ultrafine particles of a structure such that the ceramic ultrafine portion of the rare earth element is extended from the metallic ultrafine portion.

### BRIEF DESCRIPTION OF THE DRAWINGS

Other objects, features, and advantages of the invention will become apparent from the following description taken together with the drawings, in which:
Fig. 1 is a schematic diagram illustrating one example of the construction of an apparatus for producing composite ultrafine particles by the arc melting technique in accordance with the method of the present invention;
Fig. 2 is a diagram showing X-ray diffraction patterns of various ultrafine particles produced by using a Fe-Y binary alloy of a varying composition, depicted as shifted in the direction of the vertical axis (intensity);
Fig. 3 is a transmission electron micrograph of ultrafine particles produced by using a binary alloy of 50 at.% Fe-50 at.% Y;
Fig. 4 is a diagram showing X-ray diffraction patterns of various ultrafine particles produced by using a Fe-Nd binary alloy of a varying composition, depicted as shifted in the direction of the vertical axis (intensity);
Fig. 5 is a transmission electron micrograph of ultrafine particles produced by using a binary alloy of 50 at.% Fe-50 at.% Nd;
Fig. 6 is a diagram showing X-ray diffraction patterns of various ultrafine particles produced by using a Ni-Y binary alloy of a varying composition, depicted as shifted in the direction of the vertical axis (intensity);
Fig. 7 is a diagram showing X-ray diffraction patterns of various ultrafine particles produced by using a Ni-Nd binary alloy of a varying composition, depicted as shifted in the direction of the vertical axis (intensity);
Fig. 8 is a diagram showing X-ray diffraction patterns of various ultrafine particles produced by using a Co-Y binary alloy of a varying composition, depicted as shifted in the direction of the vertical axis (intensity); and
Fig. 9 is a diagram showing X-ray diffraction patterns of various ultrafine particles produced by using a Co-Nd binary alloy of a varying composition, depicted as shifted in the direction of the vertical axis (intensity).

### DETAILED DESCRIPTION OF THE INVENTION

The present inventors, after continuing a diligent study with a view to accomplishing the objects mentioned above, have found that, in producing ultrafine particles by melting an alloy as by the use of an arc, composite ultrafine particles of the order of nanometer composed of metallic ultrafine portions having magnetism and ceramic ultrafine portions of a rare earth element are produced by using a gaseous atmosphere containing nitrogen, oxygen, or a hydrocarbon as a reactive gas and, at the same time, using an alloy of an iron-family element TM (TM = Fe, Co, Ni) with a rare earth element RE (RE = Y, La, Ce, Pr, Nd, Sm, Gd, Tb, Dy, Ho, Er) as a matrix alloy to be melted as by the arc.

The metallic ultrafine portions obtained in the course of the production are thought to be single domain portions and, therefore, may well be regarded individually as permanent magnets. By the method of the present invention are obtained composite ultrafine, particles which hare ferromagnetic ultrafine portions of TM single crystals and ceramic ultrafine portions. When these composite ultrafine particles are compressed tightly, sintered in a reducing atmosphere, and magnetized, a permanent magnet of a rare earth compound which exhibits ferromagnetism, excels in wear resistance and strength, particularly the strength at elevated temperatures, and enjoys high performances produced. A bonded magnet can also be produced by dispersing the composite ultrafine particles of the present invention in a plastic or rubber matrix material. When the composite ultrafine particles of the present invention are dispersed in a liquid, the resultant dispersion can be used as a magnetic fluid.

The inventors have been ascertained by their further study that the use of a matrix alloy containing Nd as a rare earth element allows production of composite ultrafine particles of a structure such that the ceramic ultrafine portion of the rare earth element is extended from the metallic ultrafine portion.

These composite ultrafine particles are metal-ceramic composite ultrafine particles which have a peculiar structure such that the leg of rod-like or columnar ceramic ultrafine portion is extended from the head of spherical metallic ultrafine portion. The ultrafine portion in the head part is thought to comprise metallic single crystals and the ceramic ultrafine portion in the leg part to comprise a polycrystalline or an amorphous substance. When these composite ultrafine particles are used as a magnetic powder for magnetic recording, the magnetic recording medium consequently obtained is enabled to accomplish high densification because the composite ultrafine particles have the morphological anisotropy and a size of the order of nm. Further, since the composite ultrafine particles of this nature have their head parts formed of a magnetic substance such as α - Fe or Co and their leg parts formed of a ceramic nonmagnetic substance such as the nitride of a rare earth element, they can be deposited on the surface of a substrate as oriented in a fixed horizontal direction when they are passed through a weak magnetic field of a fixed direction and then made to impinge on the substrate. This method of deposition is useful for the formation of an in-plane magnetic recording medium. It is also considered possible that these composite ultrafine particles will be deposited on the substrate of the medium with their head parts or leg parts held in contact therewith and raised upright therefrom when the particles are magnetized, as required, and subsequently the magnetic field is applied perpendicularly to the substrate. This method of deposition is useful for the manufacture of a recording medium of vertical magnetization. This recording medium allows alleviation of friction and abrasion and is suitable for a contact recording because the nonmagnetic substance intervenes between the magnetic medium and a magnetic field sensor (head). Further by depositing the composite ultrafine particles on a substrate made of a ceramic substance such as, for example, Al₂O₃, Ti₂O₃, or Zr₂O₃ as arranged perpendicularly thereto in such a manner that the leg parts of nonmagnetic ceramic ultrafine particles contact the substrate, it can be expected that they will be fixed strongly to the substrate and the magnetic recording medium produced will enjoy a long service life.

The composite ultrafine particles with the morphological anisotropy according to the present invention have a structure of the combination of magnetic substance (metal) - nonmagnetic substance (ceramic) and, therefore, can be used as a sensor or a switch by virtue of their magnetism. When the direction of the composite ultrafine particles is adjusted by an external magnetic field so that the head parts - the leg parts of the individual ultrafine particles are arranged parallelly to each other, the composite ultrafine particles will not acquire electroconductivity in the direction of from the head parts (metal) to the leg parts (ceramic) or vice versa but acquire electroconductivity in the direction between the adjacent head parts (metal) thereof. Thus, the presence and the absence of the electroconductivity can be freely alternated by means of the external magnetic field. The intensity of magnetization of the composite ultrafine particles can also be varied freely by adjusting the content of metal (Fe, Co, Ni) in the composite ultrafine particles.

Now, the method of the present invention will be described more specifically below. First, as the matrix alloy, an alloy which is composed of 10 to 90 atomic % of a TM element and 10 to 90 atomic % of an RE element is used. If this proportion of the RE element is less than 10 at.%, the ceramic ultrafine portions of a rare earth element will not be easily produced. Conversely, if the proportion exceeds 90 at.%, then the ultrafine particles to be formed will be practically wholly ceramic ultrafine particles and metallic ultrafine portions will not be easily produced. For the purpose of producing composite ultrafine particles having metallic ultrafine portions and ceramic ultrafine portions, therefore, it is necessary that a matrix alloy of a composition of 10 to 90 at.% TM and 10 to 90 at.% RE be used.

As will be clearly noted from the working examples to be cited hereinbelow, the ratio of the metallic ultrafine portions to the ceramic ultrafine portions in the produced composite ultrafine particles is such that the proportion of the metallic ultrafine portions is high and the proportion of the ceramic ultrafine portions is low as compared with the proportion of the composition of the matrix alloy. When the proportion of the ceramic ultrafine portions to be produced is desired to be high, therefore, it is sufficient to use a matrix alloy containing a rare earth element at a high concentration. The particle diameter of the ultrafine particles to be formed varies with the content of the rare earth element in the matrix alloy. For instance, the size of the ultrafine particles to be formed decreases in proportion as the content of yttrium (Y) in the matrix alloy increases. By varying the content of the rare earth element in the matrix alloy, therefore, the diameter of the ultrafine particles to be formed can be controlled.

In case the morphologically anisotropic metal-ceramic composite ultrafine particles mentioned above having a structure such that the rod-like or columnar ceramic ultrafine portion is extended from the spherical metallic ultrafine portion are to be produced, neodymium (Nd) is used as the rare earth element to be contained in the matrix alloy. When the Nd content in the matrix alloy is in the range of from 10 to 90 at.%, a mixed powder which has the aforementioned morphologically anisotropic metal-ceramic composite ultrafine particles contained in the produced ultrafine particles, is obtained. When this Nd content is in the range of from 25 to 75 at.%, the morphologically anisotropic metal-ceramic composite ultrafine particles mentioned above account for a volume ratio of not less than 50% in the produced ultrafine particles. When this Nd content is in the neighborhood of 50 at.%, the produced ultrafine particles are practically wholly metal-ceramic composite ultrafine particles having the morphological anisotropy mentioned above.

When the produced ultrafine particles comprise morphologically anisotropic metal-ceramic composite ultrafine particles mentioned above and a mixture of discrete metallic ultrafine particles and ceramic ultrafine particles, the morphologically anisotropic composite ultrafine particles can be selectively collected by passing the produced powder through a sieve.

The composite ultrafine particles having metallic ultrafine portions and ceramic ultrafine portions are produced by the method of the present invention except in a special case in which Nd is used as a rare earth element. This fact may be logically explained by taking into consideration the following factors. The TM element is converted in its original metallic form into ultrafine particles because it does not easily react with the reactive gas component (nitrogen, oxygen, etc.) as compared with the RE element. In contrast, the RE element is converted into ceramic ultrafine particles because it easily reacts with the reactive gas component mentioned above. When the TM element is alloyed with the RE element and the produced alloy is converted into ultrafine particles by the use of the arc plasma process, for example, therefore, the composite ultrafine particles comprising metallic ultrafine portions an ceramic ultrafine portions are obtained.

The present invention allows use of an alloy produced by having part (0 to 50 at.%) of a TM element substituted by copper (Cu) and/or boron (B) in addition to the alloy of the TM element and the RE element mentioned above. When the TM element is alloyed with Cu, this Cu forms a solid solution with the TM element so long as the Cu content is small. The ultrafine particles which are produced by using a TM-RE-Cu matrix alloy, therefore, form composite ultrafine particles which comprise TM (Cu) metallic ultrafine portions and RE ceramic ultrafine portions.

When the TM element is alloyed with B, the resultant alloy allows occurrence therein of an eutectic where the B content is small. In this case, therefore, ultrafine particles are produced more easily than when ultrafine particles are produced by using elementary B or elementary Fe. The ultrafine particles which are produced in this case are TM ultrafine particles and TMₓB ultrafine particles. The ultrafine particles which are produced by using a TM-RE-B matrix alloy, therefore, are composite ultrafine particles comprising the TM metal portions, RE ceramic portions, and TMₓB intermetallic compound portions.

When the ultrafine particles thus obtained are sintered in a reducing atmosphere, a rare earth compound magnet of the Nd-Fe-B system or the Sm-Fe-Cu system, for example, is produced.

The matrix alloy of the composition mentioned above is then thermally melted in a gaseous atmosphere, preferably the atmosphere of hydrogen or an inert gas such as Ar, He, Xe, or Kr, containing a reactive gas and the resultant vapor of the raw material is allowed to react with the reactive gas in the atmosphere to produce ultrafine particles. Concrete examples of the reactive gas which can be used herein are nitrogen, oxygen, and a hydrocarbon. The procedure just described produces metal-rare earth nitride composite ultrafine particles when nitrogen is used, metal-rare earth oxide composite ultrafine particles when oxygen is used, or metal-rare earth carbide composite ultrafine particles when a hydrocarbon is used as the reactive gas. When nitrogen and oxygen are jointly used as the reactive gas, metal-rare earth nitride-rare earth oxide composite ultrafine particles are produced.

Incidentally, the matrix alloy is desired to be prepared by melting in an atmosphere of an inert gas before it is thermally melted in the atmosphere containing the reactive gas. This matrix alloy, prior to being thermally melted in the atmosphere of the reactive gas, may be prepared by melting under a vacuum in the same vessel as is used for the thermal melting. Otherwise, the matrix alloy prepared by melting in a separate vacuum vessel may be put to use.

Appropriately, the concentration of the reactive gas in the gaseous atmosphere is desired to be in the range of from 6.65 to 199.5 kPa (50 to 1500 Torr) as partial pressure of the reactive gas. If it is less than 6.65 kPa (50 Torr), the plasma arc will not form stably and, as a result, ultrafine particles will not occur easily. Conversely, if it exceeds 199.5 kPa (1500 Torr), the excess will hardly give a proportionate addition to the amount of ultrafine particles to be produceed.

The thermal melting of the matrix alloy contemplated by the present invention can be implemented by any of the known methods such as, for example, high-frequency thermal melting method, plasma jet heating method, high-frequency induction heating (high-frequency plasma heating) method, electron beam heating method, and laser beam heating method besides the arc melting method.

Now, the present invention will be described more specifically below with reference to working examples.

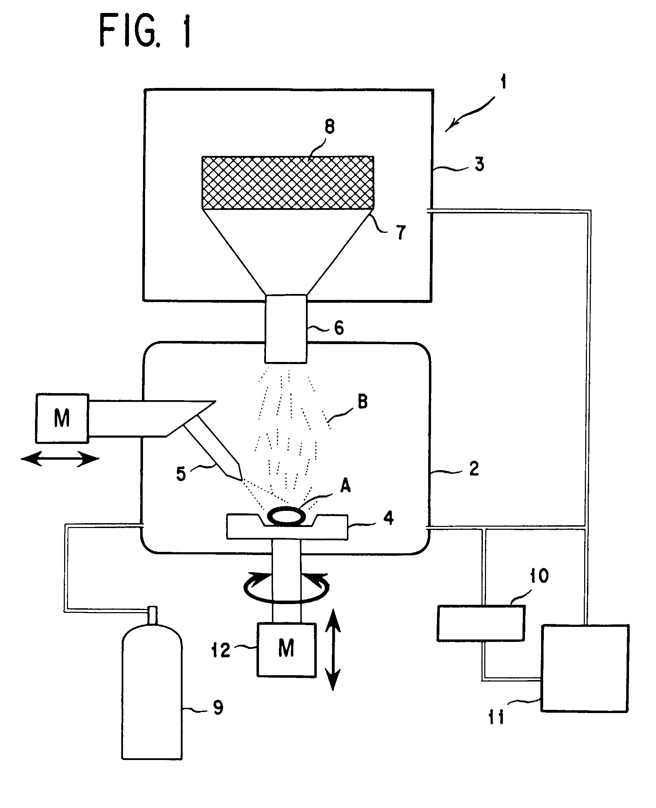

Fig. 1 is a schematic structural diagram illustrating one example of an apparatus for producing composite ultrafine particles by the arc melting in accordance with the method of the present invention, which was used in the following working examples. This apparatus 1 comprises a melting chamber 2 and a glove box 3. In the melting chamber 2, a hearth 4 for seating a raw material (matrix alloy) A is so disposed as to be freely rotated by a motor 12. Above the hearth 4 in the melting chamber 2, an arc electrode 5 is disposed so as to be moved toward or away from the matrix alloy A seated in the hearth 4. The melting chamber 2 and the glove box 3 are made to communicate with each other through the medium of a collecting tube 6. A filter 8 is detachably attached to a rear end 7 of the collecting tube 6 which is disposed inside the glove box 3. A gas mixer 9 is adapted to supply an atmospheric gas containing the reactive gas at a prescribed concentration into the melting chamber 2. A turbo molecular pump 10 and a combined mechanical booster pump and rotary pump 11 cooperate to control the pressure difference between the melting chamber 2 and the glove box 3.

When arc discharge is generated between the matrix alloy A and the arc electrode 5 in the atmosphere of the reactive gas, the matrix alloy is heated to an elevated temperature and vaporized to give rise to ultrafine particles B. The ultrafine particles B generated from the matrix alloy A are allowed to react with the reactive gas in the atmosphere, introduced by aspiration into the collecting tube 6 as entrained by a flow of gas generated by the pressure difference between the melting chamber 2 and the glove box 3, and collected by the filter 8 disposed at the rear end of the collecting tube 6.

### Example 1:

Iron and yttrium each of a purity of not less than 99.9 mass% were used as raw materials. They were subjected to arc melting in an argon atmosphere to produce button ingots having varying compositions of iron 75 at.% - yttrium 25 at.%, iron 50 at.% - yttrium 50 at.%, iron 25 at.% - yttrium 75 at.%, and iron 10 at.% - yttrium 90 at.%.

The binary alloys were severally subjected to arc melting (DC 200 A) in an atmosphere of nitrogen gas (nitrogen partial pressure 26.7 kPa) containing 4% H₂ to produce varying composite ultrafine particles.

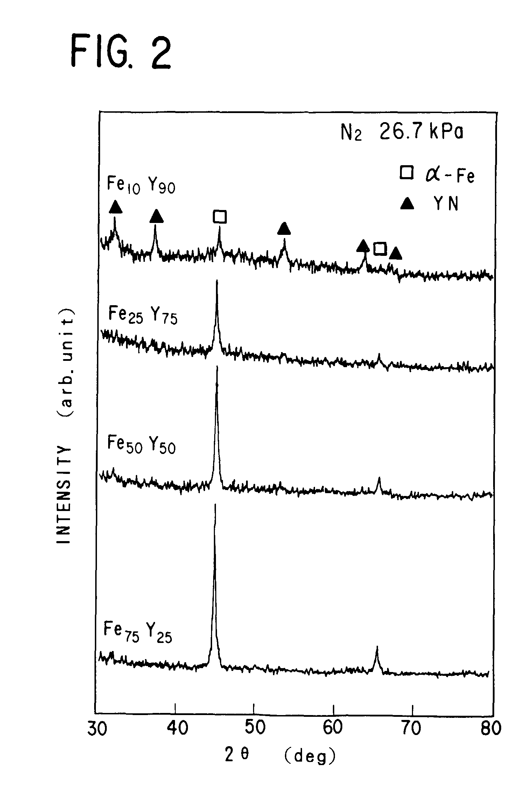

Fig. 2 shows the X-ray diffraction patterns of various ultrafine particles produced by using a Fe-Y binary alloy of a varying composition, depicted as shifted in the direction of the vertical axis (intensity). It is noted from Fig. 2 that in the approximate range of from Fe₇₅Y₂₅ to Fe₂₅Y₇₅, the produced ultrafine particles were practically wholly those of α - Fe and that YN ultrafine portions were produced only little without reference to the Y content in the matrix alloy. It is clearly noted from the diagram, however, that the amount of produced YN increased and peaks thereof appeared in the X-ray diffraction pattern when there was used a matrix alloy of the composition of Fe₁₀Y₉₀ which had a further increased Y content.

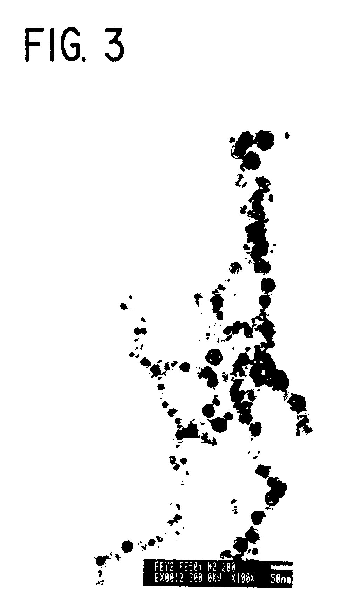

Fig. 3 is a transmission electron micrograph (TEM) of ultrafine particles produced by using a matrix alloy of the composition of Fe₅₀Y₅₀. It is clearly noted from Fig. 3 that the ultrafine particles produced by using the matrix alloy of the composition of Fe₅₀Y₅₀ comprised particles of diameters in the approximate range of from 20 to 30 nm. Particles which were in a chained state were copiously observed in the ultrafine particles. The chained state may be logically explained by a supposition that these particles individually possessed magnetism. The TEMs similarly obtained of ultrafine particles produced by using matrix alloys having the compositions of Fe₇₅ Y₂₅ and Fe₂₅ Y₇₅ were visually examined. It was consequently confirmed that the ultrafine particles produced by using the matrix alloy of the composition of Fe₇₅Y₂₅ comprised spherical particles of diameters in the approximate range of from 50 to 200 nm and the ultrafine particles produced by using the matrix alloy having the composition of Fe₂₅Y₇₅ comprised particles of diameters in the approximate range of from 50 to 100 nm and particles of diameters in the approximate range of from 10 to 20 nm. When the various kinds of ultrafine particles mentioned above were subjected to electron diffraction, rings of crystals of α - Fe and YN emitted from the chained particles were observed. By the electron diffraction or by the energy dispersive X-ray spectroscopy (EDX) analysis, however, the distinction between α - Fe and YN due to changes in size and morphology of particles could not be made. It is clearly remarked from the photographs that the diameters of the produced ultrafine particles decreased in proportion as the Y content in the matrix alloy increased. The data justify the conclusion that the size of the α - Fe ultrafine particles to be produced can be varied by varying the Y content in the matrix alloy.

### Example 2:

Iron and neodymium each of a purity of not less than 99.9 mass% were used as raw materials. These raw materials were subjected to arc melting in an argon atmosphere to form button ingots having the compositions of iron 75 at.% - neodymiun 25 at.%, iron 50 at.% - neodymium 50 at.%, and iron 25 at.% - neodymium 75 at.%.

Composite ultrafine particles were produced by faithfully following the procedure of Example 1 while using the binary alloys mentioned above instead.

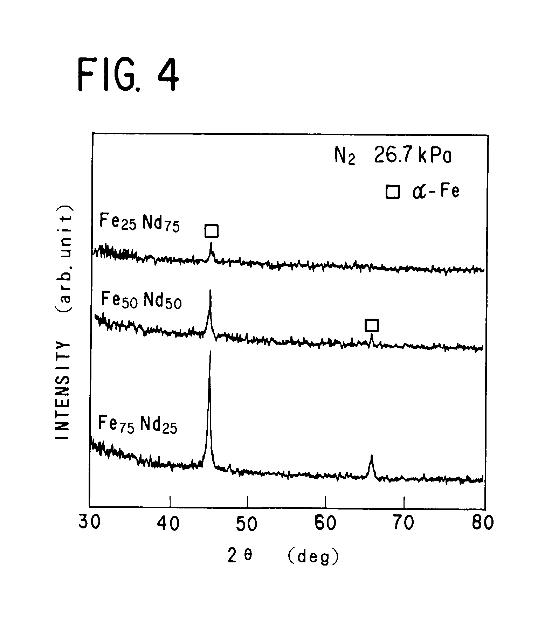

Fig. 4 shows the X-ray diffraction patterns of various ultrafine particles produced by using a Fe-Nd binary alloy of a varying composition, depicted as shifted in the direction of the vertical axis (intensity). It is remarked from Fig. 4 that, in the ultrafine particles produced by using the matrix alloys of the compositions in the range of from Fe₇₅Nd₂₅ to Fe₂₅Nd₇₅, the X-ray diffraction patterns showed peaks exclusively of α - Fe as in the case of the ultrafine particles of the Fe-Y system.

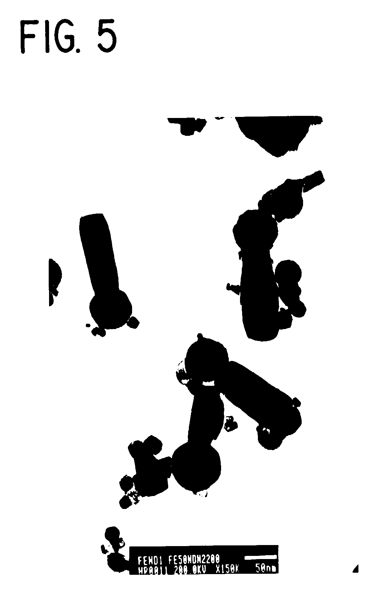

Fig. 5 is a transmission electron micrograph of ultrafine particles produced by using a binary alloy of the composition of Fe₅₀Nd₅₀. It is clearly noted from Fig. 5 that composite ultrafine particles having a characteristic form different from that of the ultrafine particles of the Fe-Y system were produced. These particles comprised composite ultrafine particles of the structure having a rod-like portion of a diameter in the approximate range of from 50 to 200 nm attached to a spherical portion of a diameter in the neighborhood of 50 nm. The results of the EDX and the electron diffraction showed that the spherical portions in the head parts were single crystals of α - Fe. The rod-like portions were judged to be polycrystals of the Nd-system ceramic. When the results of the X-ray diffraction mentioned above are taken into consideration, however, they could be possibly judged to be formed of an amorphous Nd-system ceramic substance.

In Example 1 and Example 2 mentioned above, during the production of ultrafine particles, the occurrence of sputtering particles was not observed throughout the whole composition range of the matrix alloy of the Fe-Y system or the Fe-Nd system unlike the production using the matrix alloy solely of Fe or the matrix alloy of the Fe-Cr system. The amount of ultrafine particles to be produced decreased in proportion as the Y content or the Nd content in the matrix alloy increased.

### Example 3:

Nickel and yttrium each of a purity of not less than 99.9 mass% were used as raw materials. These raw materials were subjected to arc melting in an argon atmosphere to produce button ingots having varying compositions of nickel 75 at.% - yttrium 25 at.%, nickel 50 at.% - yttrium 50 at.%, and nickel 25 at.% - yttrium 75 at.%.

Composite ultrafine particles were produced by faithfully following the procedure of Example 1 while using the binary alloys mentioned above instead.

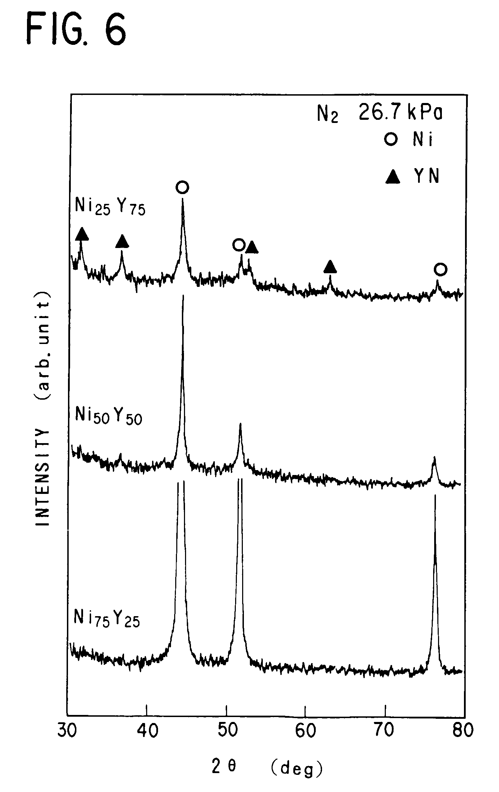

Fig. 6 shows the X-ray diffraction patterns of various ultrafine particles produced by using a matrix alloy of the Ni-Y system having a varying composition, depicted as shifted in the direction of the vertical axis (intensity). It is remarked from Fig. 6 that, in the ultrafine particles produced, the strong peaks of Ni were observed to indicate the formation of Ni in a large amount and only weak peaks of YN were observed to indicate the formation of YN in a small amount in the range of from Ni₇₅Y₂₅ to Ni₅₀Y₅₀. At the composition of Ni₂₅Y₇₅, however, the peaks of YN gained in intensity to indicate an increase in the amount of YN ultrafine portions unlike the ultrafine particles of the Fe₂₅Y₇₅ system.

### Example 4:

Nickel and neodymium each of a purity of not less than 99.9 mass% were used as raw materials. These raw materials were subjected to arc melting in an argon atmosphere to produce button ingots having different compositions of nickel 75 at.% - neodymium 25 at.% and nickel 50 at.% - neodymium 50 at.%.

Composite ultrafine particles were produced by faithfully following the procedure of Example 1 while using the binary alloys mentioned above instead.

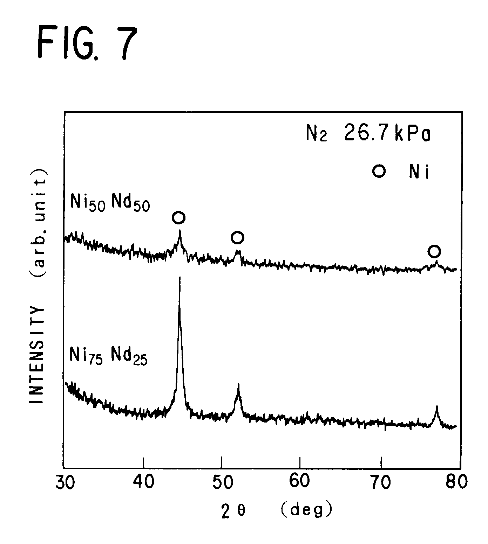

Fig. 7 shows the X-ray diffraction patterns of various ultrafine particles produced by using a matrix alloy of the Ni-Nd system having a varying composition, depicted as shifted in the direction of the vertical axis (intensity). Although confirmation was made only in the range of from Ni₇₅Nd₂₅ to Ni₅₀Nd₅₀, the peaks exclusively of Ni were observed in the above range.

The TEM similarly obtained of ultrafine particles produced by using a matrix alloy having the composition of Ni₅₀Nd₅₀ was visually examined. It was consequently confirmed that practically all the formed ultrafine particles were extremely minute spheres and squarish rectangular parallelepipeds having sizes in the approximate range of from 20 to 50 nm. Of these ultrafine particles, particularly those of the appearance of rectangular parallelepipeds were found by a microscopic observation at large magnifications to be composite ultrafine particles similar in morphology to the ultrafine particles obtained of a matrix alloy of the Fe-Nd system. The probability of existence of composite ultrafine particles grown to a large size of about 100 nm in the ultrafine particles of the Ni-Nd system was very low, a fact indicating that practically all the composite ultrafine particles had a small size. The results of the electron diffraction and the EDX analysis showed that these composite ultrafine particles had the spherical portions in their head parts formed of a single crystal of Ni similarly to the composite ultrafine particles of the Fe-Nd system. The rod-like parts (squarish rectangular parallelepipeds) were judged to be polycrystals of the Nd system ceramic. When the results of the X-ray diffraction mentioned above are taken into consideration, however, they could be possibly judged to be formed of an amorphous Nd-system ceramic substance.

### Example 5:

Cobalt and yttrium each of a purity of not less than 99.9 mass% were used as raw materials. These raw materials were subjected to arc melting in an argon atmosphere to produce button ingots having the varying compositions of cobalt 75 at.% - yttrium 25 at.%, cobalt 50 at.% - yttrium 50 at.%, and cobalt 25 at.% - yttrium 75 at.%.

Composite ultrafine particles were produced by faithfully following the procedure of Example 1 while using the binary alloys mentioned above instead.

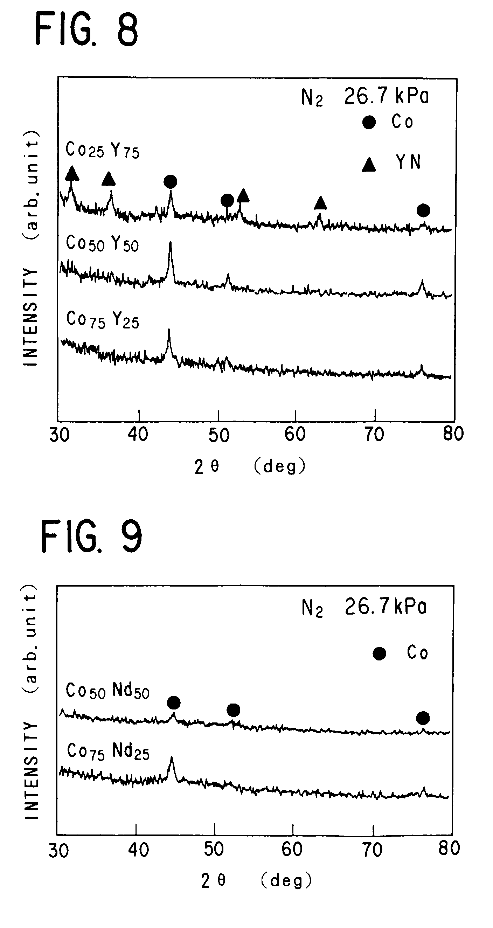

Fig. 8 shows the X-ray diffraction patterns of ultrafine particles produced by using a matrix alloy of the Co-Y system having a varying composition, depicted as shifted in the direction of the vertical axis (intensity). On the basis of the data of Fig. 8, it is confirmed that the formed ultrafine particles showed a strong peak of fcc-Co, i.e. a high-temperature phase of Co, in the range of from Co₇₅Y₂₅ to Co₅₀Y₅₀, a fact indicating that the fcc-Co ultrafine particles were produced in a large amount. The ultrafine particles from the matrix alloy of Co₂₅Y₇₅, similarly to those of Ni₂₅Y₇₅, showed the strong peaks of YN, indicating that the ultrafine particles were in two phases of fcc-Co and YN.

### Example 6:

Cobalt and neodymium each of a purity of not less than 99.9 mass% were used as raw materials. These raw materials were subjected to arc melting to produce button ingots having the different compositions of cobalt 75 at.% - neodymium 25 at.% and cobalt 50 at.% - neodymium 50 at.%.

Composite ultrafine particles were produced by faithfully following the procedure of Example 1 while using the binary alloys mentioned above instead.

Fig. 9 shows the X-ray diffraction patterns of ultrafine particles produced by using a matrix alloy of the Co-Nd system having a varying composition, depicted as shifted in the direction of the vertical axis (intensity). Although confirmation was made only in the range of from Co₇₅Nd₂₅ to Co₅₀Nd₅₀, the peaks exclusively of fcc-Co were found in the above range, indicating that fcc-Co ultrafine particles were mainly produced similarly to the ultrafine particles of the Co-Y system.

The results of Example 1 through 6 cited above indicate that the ratio of occurrence of ceramic ultrafine particles was small as compared with the ratio of occurrence of metallic (Fe, Co, Ni) ultrafine particles. The following factors possibly offer a basis for logical explanation of this fact.
(1) Difference in amount of ultrafine particles to be produced due to difference in boiling point (B.P.) of component elements:
The boiling point of each metal is as follows:
Fe: 3135 (K), Co: 3201 (K), Ni: 3187 (K)
Y: 3611 (K), Nd: 3341 (K)

Since Y and Nd have high boiling points as compared with Fe, Co, and Ni as shown above, they are not easily vaporized. Thus, the amount of YN or NdN ultrafine particles to be produced is small.
(2) Difference in amount of ultrafine particles to be produced due to difference in ratio of nitriding:
The strength of affinity of Y and Nd for nitrogen is high as compared with that of Fe, Co, and Ni for nitrogen. Thus, during the melting of a matrix alloy by the arc nitrogen plasma, Y or Nd in the part of the matrix alloy exposed directly to the arc is melted and vaporized simultaneously with the metallic element (Fe, Co, Ni) contained therein, whereas Y or Nd in the part which surrounds the exposed part and is not directly exposed to the arc inevitably undergoes nitriding. As a result, Y (YN) or Nd (NdN) is not easily vaporized from the nitrided part of the matrix alloy and the amount of ultrafine particles thereof to be produced is small.
The ultrafine particles produced in the working examples cited above have Fe, Ni, or Co as their main phase and have the possibility of assuming magnetism. Thus, they were tested for magnetic properties by the use of a vibrating sample magnetometer (VSM). As a result, the ultrafine particles were found invariably to manifest the characteristics inherent in ferromagnetism at room temperature. These ultrafine particles were tested for coercive force (Hc). The results are shown in Table 1.

**Table 1**

| Composition of matrix alloy (at.%) | | Hc(Oe) |
|---|---|---|
| TM-Y system | Fe₅₀Y₅₀ | 286 |
| | Co₅₀Y₅₀ | 373 |
| | Ni₅₀Y₅₀ | 91.4 |
| TM-Nd system | Fe₅₀Nd₅₀ | 305 |
| | Co₅₀Nd₅₀ | 377 |
| | Ni₅₀Nd₅₀ | 53 |

It will be clear from the working examples cited above that the method of the present invention allows production of heretofore unattainable composite ultrafine particles of the order of nm comprising metallic ultrafine portions and ceramic ultrafine portions of a rare earth element and possessing magnetism. The composite ultrafine particles obtained excel in wear resistance and strength, particularly the hot strength and retain ferromagnetism for a long time because they contain ferromagnetic metallic ultrafine portions and also contain ceramic ultrafine portions. These composite ultrafine particles, therefore, are at an advantage in being usable as a magnetic material for the production of a rare earth compound permanent magnet and a bonded magnet which excel in abrasion resistance and strength, particularly the hot strength and enjoys high performance.

When an alloy containing Nd as a rare earth element is used, composite ultrafine particles having a morphologically anisotropic structure such that the ceramic ultrafine portion of a rare earth element is extended from the metallic ultrafine portion can be produced. These composite ultrafine particles possess morphological anisotropy and have a size of the order of nm. When they are used as a magnetic powder for magnetic recording, therefore, they are at an advantage in enabling the produced magnetic recording media to attain high densification and manifest high coercive force. Further, since they have a structure of combining a magnetic substance (metal) and a nonmagnetic substance (ceramic), they can be used for a sensor or a switch by virtue of their magnetism.

Since the composite ultrafine particles of the present invention contain ceramic ultrafine portions and, therefore, possess a high melting point and excel in such mechanical and physical properties as hardness, strength, and heat resistance, they can find utility advantageously in a wide range of applications such as, for example, dispersing materials for various composite materials, piezoelectric materials, surface-treating blast powders, and other functional materials.

## Claims

1. Metal-ceramic composite ultrafine particles, each particle comprising an ultrafine magnetic metallic portion of at least one metal selected from among Fe, Co, and Ni and an ultrafine ceramic phase portion of at least one rare earth element, produced by thermally melting a raw material of an alloy comprising 10 to 90 atomic % of said at least one metal and 10 to 90 atomic % of said at least one rare earth element in a gaseous atmosphere containing at least one reactive gas consisting of nitrogen, oxygen and a hydrocarbon and causing the vaporized raw material to react with the reactive gas in said atmosphere, thereby producing said composite ultrafine particles.

2. The metal-ceramic composite ultrafine particles according to claim 1, wherein said rare earth element is at least one member selected from the group of Y, La, Ce, Pr, Nd, Sm, Gd, Tb, Dy, Ho, and Er.

3. The metal-ceramic composite ultrafine particles according to claim 1, wherein said rare earth element is neodymium.

4. The metal-ceramic composite ultrafine particles according to claim 3, wherein said composite ultrafine particles possess a structure, wherein said ultrafine ceramic phase portion has the form of a rod, said ultrafine metallic portion of said at least one metal is of a spherical form and said ceramic phase portion is attached to said spherical metallic portion.

5. The metal-ceramic composite ultrafine particles according to any one of claims 1 to 4, wherein said composite ultrafine particles have a size in the approximate range of from 10 to 200 nm.

6. The metal-ceramic composite ultrafine particles according to any one of claims 1 to 5, wherein said ultrafine metallic portions are composed of single crystals of metal.

7. The metal-ceramic composite ultrafine particles according to any one of claims 1 to 6, wherein said ultrafine metallic portions of said at least one metal comprise ultrafine portions of a solid solution of copper in a metal selected from among Fe, Co, and Ni.

8. The metal-ceramic composite ultrafine particles according to any of claims 1 to 7, further comprising ultrafine portions of an intermetallic compound of said metal with boron.

9. A method for the production of composite ultrafine particles according to any of the preceding claims, comprising the steps of:
thermally melting a raw material of an alloy comprising 10 to 90 atomic % of at least one metallic element selected from the group consisting of Fe, Co and Ni and 10 to 90 atomic % of at least one rare earth element selected from the group consisting of Y, La, Ce, Pr, Nd, Sm, Gd, Tb, Dy, Ho and Er in a gaseous atmosphere containing at least one reactive gas selected from the group consisting of nitrogen, oxygen, and a hydrocarbon, and
causing the vaporized raw material to react with the reactive gas in said atmosphere, thereby producing composite ultrafine particles comprising metallic ultrafine particles and ceramic ultrafine particles.

10. The method according to claim 9, wherein up to 50 atomic % of said at least one metallic element is substituted partly by copper, boron, or both.

11. The method according to any one of claims 9 or 10 wherein an alloy containing neodymium as said at least one rare earth element is used to produce composite ultrafine particles having a structure such that the ceramic ultrafine particle of said neodymium is attached to the metallic ultrafine particle.

12. The method according to any one of claims 9 to 11, wherein said gaseous atmosphere is formed of a mixed gas of said reactive gas and hydrogen.

13. The method according to any one of claims 9 to 11, wherein said gaseous atmosphere is formed of a mixed gas of said reactive gas and an inert gas.

14. The method according to claim 9, 12 or 13, wherein said raw material contains 10 to 90 atomic % of neodymium and said
raw material is caused to react with the reactive gas in said atmosphere, to thereby produce a mixture of metallic ultrafine particles and metal-ceramic composite ultrafine particles having such morphologically anisotropic structure that a columnar ceramic ultrafine particle of a nitride, oxide, or carbide of neodymium is attached to a spherical metallic ultrafine particle.

15. The method according to claim 14, wherein an alloy comprising 25 to 75 atomic % of said at least one metallic element and 25 to 75 atomic % of neodymium is used as said raw material to produce a mixture of said metallic ultrafine particles and at least 50 % by volume of metal-ceramic composite ultrafine particles having such morphologically anisotropic structure that said columnar ceramic ultrafine particle of a nitride, oxide, or carbide of neodymium is attached to said spherical metallic ultrafine particle.

16. A mixture comprising composite ultrafine particles according to any of claims 1 to 9 and discrete metallic ultrafine particles.

17. A mixture according to claim 16, which comprises at least 50 % by volume of said composite ultrafine particles.

## Patentansprüche

1. Ultrafeine metallkeramische Kompositpartikel, wobei jedes Partikel einen ultrafeinen magnetischen metallischen Abschnitt aus mindestens einem aus Fe, Co, und Ni gewählten Metall und einem ultrafeinen keramischen Phasenabschnitt aus mindestens einem Seltenerde-Elemtent aufweist, hergestellt durch thermisches Schmelzen eines Rohmaterials aus einer Legierung, die 10 bis 90 Atom-% des mindestens einen Metalls und 10 bis 90 Atom-% des mindestens einen Seltenerde-Elements enthält, in einer Gasatmosphäre, die mindestens ein reaktives Gas enthält, das aus Stickstoff, Sauerstoff und einem Kohlenwasserstoff besteht, und durch Bewirken, daß das verdampfte Rohmaterial mit dem reaktiven Gas in dieser Atmosphäre reagiert, wodurch die ultrafeinen Kompositpartikel hergestellt werden.

2. Ultrafeine metallkeramische Kompositpartikel nach Anspruch 1, wobei das Seltenerde-Element mindestens ein Element ist, das aus der Gruppe von Y, La, Ce, Pr, Nd, Sm, Gd, Tb, Dy, Ho, und Er gewählt ist.

3. Ultrafeine metallkeramische Kompositpartikel nach Anspruch 1, wobei das Seltenerde-Element Neodym ist.

4. Ultrafeine metallkeramische Kompositpartikel nach Anspruch 3, wobei die ultrafeinen Kompositpartikel eine Struktur besitzen, bei welcher der ultrafeine keramische Phasenabschnitt die Form eines Stabes besitzt, der ultrafeine metallische Abschnitt aus dem mindestens einen Metall kugelförmig ist und der keramische Phasenabschnitt an dem kugelförmigen metallischen Abschnitt befestigt ist.

5. Ultrafeine metallkeramische Kompositpartikel nach einem der Ansprüche 1 bis 4, wobei die ultrafeinen Kompositpartikel eine Größe zwischen ca. 10 bis 200 nm besitzen.

6. Ultrafeine metallkeramische Kompositpartikel nach einem der Ansprüche 1 bis 5, wobei die ultrafeinen metallischen Abschnitte aus einzelnen Metallkristallen bestehen.

7. Ultrafeine metallkeramische Kompositpartikel nach einem der Ansprüche 1 bis 6, wobei die ultrafeinen metallischen Abschnitte aus dem mindestens einen Metall ultrafeine Abschnitte einer festen Lösung von Kupfer in einem aus Fe, Co, und Ni gewählten Metall aufweisen.

8. Ultrafeine metallkeramische Kompositpartikel nach einem der Ansprüche 1 bis 7, welche weiter ultrafeine Abschnitte einer intermetallischen Verbindung des Metalls mit Bor aufweisen.

9. Verfahren zur Herstellung von ultrafeinen Kompositpartikeln nach einem der vorstehenden Ansprüche, welches folgende Schritte umfaßt:
thermisches Schmelzen eines Rohmaterials aus einer Legierung, die 10 bis 90 Atom-% von mindestens einem metallischen Element, das aus der Gruppe gewählt ist, die aus Fe, Co, und Ni besteht, und 10 bis 90 Atom-% von mindestens einem Seltenerde-Element aufweist, das aus der Gruppe gewählt ist, die aus Y, La, Ce, Pr, Nd, Sm, Gd, Tb, Dy, Ho, und Er besteht, und zwar in einer Gasatmosphäre, die mindestens ein reaktives Gas enthält, das aus der Gruppe gewählt ist, die aus Stickstoff, Sauerstoff und einem Kohlenwasserstoff besteht, und
Bewirken, daß das verdampfte Rohmaterial mit dem reaktiven Gas in der Atmosphäre reagiert, wodurch ultrafeine Kompositpartikel erzeugt werden, welche ultrafeine metallische Partikel und ultrafeine keramamische Partikel enthalten.

10. Verfahren nach Anspruch 9, bei welchem bis zu 50 Atom-% des mindestens einen metallischen Elements teilweise durch Kupfer, Bor oder beides ersetzt ist.

11. Verfahren nach einem der Ansprüche 9 oder 10, bei welchem eine Legierung, die Neodym als das mindestens eine Seltenerde-Element enthält, verwendet wird, um ultrafeine Kompositpartikel zu erzeugen, die eine solche Struktur besitzen, daß das keramische ultrafeine Partikel aus Neodym am metallischen ultrafeinen Partikel befestigt ist.

12. Verfahren nach einem der Ansprüche 9 bis 11, bei welchem die Gasatmosphäre aus einem Mischgas aus diesem reaktiven Gas und Wasserstoff besteht.

13. Verfahren nach einem der Ansprüche 9 bis 11, bei welchem die Gasatmosphäre aus einem Mischgas aus diesem reaktiven Gas und einem Inertgas besteht.

14. Verfahren nach Anspruch 9, 12, oder 13, bei welchem das Rohmaterial 10 bis 90 Atom- % Neodym enthält und
bewirkt wird, daß das Rohmaterial mit dem reaktiven Gas in der Atmosphäre reagiert, um dadurch ein Gemisch aus ultrafeinen metallischen Partikeln und ultrafeinen metallkeramischen Kompositpartikeln zu erzeugen, welche eine solche morphologisch anisotrope Struktur aufweisen, daß ein säulenförmiges ultrafeines keramisches Partikel aus einem Nitrid, einem Oxid, oder Karbid von Neodym an einem ultrafeinen kugelförmigen metallischen Partikel befestigt ist.

15. Verfahren nach Anspruch 14, bei welchem eine Legierung, die 25 bis 75 Atom-% des mindestens einen metallischen Elements und 25 bis 75 Atom-% Neodym enthält, als Rohmaterial verwendet wird, um ein Gemisch aus den ultrafeinen metallischen Partikeln und mindestens 50 Volumen-% der ultrafeinen metallkeramischen Kompositpartikel zu erzeugen, die eine solche morphologisch anisotrope Struktur aufweisen, daß das säulenförmige ultrafeine keramische Partikel aus einem Nitrid, einem Oxid, oder Karbid von Neodym an dem ultrafeinen kugelförmigen metallischen Partikel befestigt ist.

16. Gemisch, welches ultrafeine Kompositpartikel nach einem der Ansprüche 1 bis 9 und ultrafeine diskrete metallische Partikel aufweist.

17. Gemisch nach Anspruch 16, welches mindestens 50 Volumen-% von den ultrafeinen Kompositpartikeln aufweist.

## Revendications

1. Particules composites ultrafines de métal et de céramique, chaque particule comprenant une partie métallique magnétique ultrafine, constituée d'au moins un métal choisi parmi Fe, Co et Ni, et une partie de phase céramique ultrafine, comprenant au moins un élément des terres rares, particules que l'on obtient en faisant fondre par la chaleur une matière première constituée d'un alliage renfermant 10 à 90 % en atomes dudit au moins un métal et 10 à 90 % en atomes dudit au moins un élément des terres rares, dans une atmosphère gazeuse contenant au moins un gaz apte à réagir, constitué d'azote, d'oxygène ou d'un hydrocarbure, et en faisant réagir la matière première vaporisée avec le gaz apte à réagir de ladite atmosphère, en produisant ainsi lesdites particules ultrafines composites.

2. Particules ultrafines composites de métal et de céramique selon la revendication 1, dans lesquelles ledit élément des terres rares est au moins un élément choisi parmi Y, La, Ce, Pr, Nd, Sm, Gd, Tb, Dy, Ho et Er.

3. Particules ultrafines composites de métal et de céramique selon la revendication 1, dans lesquelles ledit élément des terres rares est le néodyme.

4. Particules ultrafines composites de métal et de céramique selon la revendication 3, qui possèdent une structure où ladite partie de phase céramique ultrafine a la forme d'une tige, ladite partie métallique ultrafine en ledit au moins un métal a une forme sphérique et ladite partie phase céramique est liée à ladite partie métallique sphérique.

5. Particules ultrafines composites de métal et de céramique selon l'une quelconque des revendications 1 à 4, qui ont une taille comprise dans l'intervalle allant d'environ 10 nm à environ 200 nm.

6. Particules ultrafines composites de métal et de céramique selon l'une quelconque des revendications 1 à 5, dans lesquelles lesdites parties métalliques ultrafines sont constituées de monocristaux de métal.

7. Particules ultrafines composites de métal et de céramique selon l'une quelconque des revendications 1 à 6, dans lesquelles lesdites parties métalliques ultrafines en ledit au moins un métal comprennent des parties ultrafines constituées d'une solution solide de cuivre dans un métal choisi parmi Fe, Co et Ni.

8. Particules ultrafines composites de métal et de céramique selon l'une quelconque des revendications 1 à 7, qui comprennent en outre des parties ultrafines constituées d'un composé intermétallique dudit métal avec le bore.

9. Procédé de préparation de particules ultrafines composites de métal et de céramique selon l'une quelconque des revendications précédentes, qui comprend les étapes consistant à :
- faire fondre par la chaleur une matière première constituée d'un alliage renfermant 10 à 90 % en atomes d'au moins un élément métallique choisi parmi Fe, Co et Ni et 10 à 90 % en atomes d'au moins un élément des terres rares, choisi parmi Y, La, Ce, Pr, Nd, Sm, Gd, Tb, Dy, Ho et Er, dans une atmosphère gazeuse contenant au moins un gaz apte à réagir, choisi parmi l'azote, l'oxygène et un hydrocarbure, et
- faire réagir la matière première vaporisée avec le gaz apte à réagir de ladite atmosphère, en produisant ainsi des particules ultrafines composites qui comprennent des particules ultrafines métalliques et des particules ultrafines céramiques.

10. Procédé selon la revendication 9, dans lequel on remplace jusqu'à 50 % en atomes dudit au moins un élément métallique par du cuivre, du bore ou les deux.

11. Procédé selon la revendication 9 ou 10, dans lequel on utilise un alliage contenant du néodyme en tant que ledit au moins un élément des terres rares pour produire des particules ultrafines composites ayant une structure telle que la particule ultrafine céramique contenant ledit néodyme est liée à la particule ultrafine métallique.

12. Procédé selon l'une quelconque des revendications 9 à 11, dans lequel ladite atmosphère gazeuse est un mélange gazeux constitué dudit gaz apte à réagir et d'hydrogène.

13. Procédé selon l'une quelconque des revendications 9 à 11, dans lequel ladite atmosphère gazeuse est un mélange gazeux constitué dudit gaz apte à réagir et d'un gaz inerte.

14. Procédé selon l'une quelconque des revendications 9, 12 et 13, dans lequel ladite matière première contient 10 à 90 % en atomes de néodyme et on fait réagir ladite matière première avec le gaz apte à réagir de ladite atmosphère, pour produire ainsi un mélange de particules ultrafines métalliques et de particules ultrafines composites de métal et de céramique, ayant une structure morphologiquement anisotrope telle qu'une particule ultrafine céramique en forme de colonne, constituée d'un nitrure, d'un oxyde ou d'un carbure de néodyme, est liée à une particule ultrafine métallique sphérique.

15. Procédé selon la revendication 14, dans lequel on utilise comme matière première un alliage renfermant 25 à 75 % en atomes dudit au moins un élément métallique et 25 à 75 % en atomes de néodyme, pour produire un mélange desdites particules ultrafines métalliques et d'au moins 50 % en volume de particules ultrafines composites de métal et de céramique, ayant une structure morphologiquement anisotrope telle que ladite particule ultrafine céramique en forme de colonne, constituée d'un nitrure, d'un oxyde ou d'un carbure de néodyme, est liée à ladite particule ultrafine métallique sphérique.

16. Mélange comprenant des particules ultrafines composites selon l'une quelconque des revendications 1 à 9, et des particules ultrafines métalliques séparées.

17. Mélange selon la revendication 16, qui renferme au moins 50 % en volume desdites particules ultrafines composites.
